# EUROPÄISCHE PATENTANMELDUNG

(11) **EP 3 767 651 A1**
(43) Veröffentlichungstag der Anmeldung: **20.01.2021**
(21) Anmeldenummer: 19186821.5
(22) Anmeldetag: 17.07.2019
(51) Int. Cl.: H01F 27/12

(54) **VERFAHREN ZUM BETREIBEN EINES KÜHLSYSTEMS EINES TRANSFORMATORS**

(71) Anmelder: Siemens Aktiengesellschaft, 80333 München (DE)
(72) Erfinder: Scala, Mario, 8010 Graz (AT); Bachinger, Florian, 4222 St. Georgen/Gusen (AT)
(74) Vertreter: Maier, Daniel Oliver

(57) **Zusammenfassung**

Die Erfindung betrifft ein Verfahren zum Betreiben eines Kühlsystems eines Transformators (1), wobei der Transformator (1) mittels einer im Kühlsystem zirkulierenden Kühlflüssigkeit (7) gekühlt wird,
das Kühlsystem umfassend
- zumindest eine Wärmetauscher-Einheit (5),
- mit der zumindest einen Wärmetauscher-Einheit (5) zusammenwirkende Mittel (15) zur Erhöhung einer Wärmetauschleistung der zumindest einen Wärmetauscher-Einheit (5),
- eine Steuerungseinheit (8),
wobei die Steuerungseinheit (8) in einem Regelbetriebszustand eine Leistung der Mittel (15) zur Erhöhung der Wärmetauschleistung in Abhängigkeit einer gemessenen oberen Temperatur Tₒ regelt.

Um eine verbesserte Charakteristik des Kühlsystems während des Betriebs bei niedrigen Umgebungstemperaturen des Transformators (1), insbesondere bei einem Einschaltvorgang nach langer Lagerung in kaltem Zustand, zu erreichen, ist erfindungsgemäß vorgesehen, dass die Steuerungseinheit (8) unabhängig von der gemessenen oberen Temperatur Tₒ die Mittel (15) zur Erhöhung der Wärmetauschleistung nicht aktiviert und/oder mit einer gegenüber dem Regelbetriebszustand verringerten Leistung betreibt, wenn eine untere Temperatur Tᵤ der Kühlflüssigkeit (7) während des Betriebs des Transformators (1) unterhalb eines unteren Schwellwerts Sᵤ liegt.

## Beschreibung

### GEBIET DER ERFINDUNG

Die Erfindung betrifft ein Verfahren zum Betreiben eines Kühlsystems eines zumindest eine Transformatorwicklung aufweisenden Transformators, vorzugsweise eines Leistungstransformators oder einer Drossel, wobei eine Kühlflüssigkeit des Kühlsystems die zumindest eine Transformatorwicklung, sowie gegebenenfalls einen Transformatorkern, umgibt und in einem Regelbetriebszustand des Transformators die Kühlflüssigkeit im Kühlsystem zirkuliert, wobei zumindest die in der zumindest einen Transformatorwicklung entstehende Wärme mittels der zirkulierenden Kühlflüssigkeit an eine umgebende Atmosphäre abgegeben wird,
das Kühlsystem umfassend
- zumindest eine von der Kühlflüssigkeit durchströmbare Wärmetauscher-Einheit zur Abgabe von Wärme von der Kühlflüssigkeit an die umgebende Atmosphäre,
- mit der zumindest einen Wärmetauscher-Einheit zusammenwirkende Mittel zur Erhöhung einer Wärmetauschleistung der zumindest einen Wärmetauscher-Einheit,
- eine Steuerungseinheit zur Regelung der Wärmetauschleistung der zumindest einen Wärmetauscher-Einheit,
wobei eine obere Temperatur Tₒ im Kühlsystem und/oder am Transformator gemessen wird und die Steuerungseinheit in einem Regelbetriebszustand eine Leistung der Mittel zur Erhöhung der Wärmetauschleistung der zumindest einen Wärmetauscher-Einheit in Abhängigkeit der gemessenen oberen Temperatur Tₒ regelt, sowie eine Steuerungseinrichtung, einen Transformator und ein Computerprogrammprodukt.

### STAND DER TECHNIK

Die Transformatorwicklungen, auch Spulen genannt, eines Transformators bestehen aus eng gewickelten Drähten, wobei in einem Betriebszustand des Transformators im Inneren dieser Wicklungen Wärme entsteht. Transformatoren, die nur eine als Hauptwicklung ausgebildete Transformatorwicklung umfassen, können beispielsweise als Drosseln oder Drosselspulen fungieren. Weist der Transformator zumindest zwei Transformatorwicklungen auf, so kann mittels des Transformators eine Eingangsspannung auf eine Ausgangsspannung transformiert werden. Üblicher Weise umfassen Transformatoren auch zumindest einen Transformatorkern, welcher ebenfalls eine Wärmequelle darstellen kann.

Um zu vermeiden, dass sich die Wärme innerhalb des Transformators aufstaut, ist ein Kühlsystem vorgesehen, in welchem eine Kühlflüssigkeit zum Wärmeabtransport in einem Regelbetriebszustand zirkuliert, sodass die Wärme aus dem Transformator, sprich von den Transformatorwicklungen und gegebenenfalls vom Transformatorkern, an die Umgebung bzw. die umgebende Atmosphäre abgegeben wird. Der Regelbetriebszustand zeichnet sich vornehmlich dadurch aus, dass Strom durch den Transformator fließt und sich eine Zirkulation eines maßgeblichen Teils der Kühlflüssigkeit im Kühlsystem eingestellt hat. Die Zirkulation der Kühlflüssigkeit kann dabei entweder passiv durch Konvektion erfolgen oder durch Pumpeinheiten wie Kühlflüssigkeitspumpen unterstützt bzw. gelenkt werden. Üblicherweise dient die Kühlflüssigkeit auch als Isolationsmedium in elektrischer Hinsicht.

Das Kühlsystem des Transformators umfasst dabei in der Regel zumindest eine Wärmetauscher-Einheit, durch welche die Kühlflüssigkeit im Regelbetriebszustand strömt. Mittels der zumindest einen Wärmetauscher-Einheit wird Wärme von der Kühlflüssigkeit an die umgebende Atmosphäre abgegeben. Um die Wärmetauschleistung zu erhöhen und gegebenenfalls die Fläche zur Wärmeabgabe der Wärmetauscher-Einheit reduzieren zu können, sind in der Regel Mittel zur Erhöhung der Wärmetauschleistung der zumindest einen Wärmetauscher-Einheit vorgesehen, welche mit der jeweiligen Wärmetauscher-Einheit zusammenwirken. Bei den Mitteln zur Erhöhung der Wärmetauschleistung kann es sich um eine oder mehrere Ventilatoreinheiten handeln, welche einen Luftstrom erzeugen, welcher Luftstrom auf die Wärmetauscher-Einheit gerichtet ist, wobei bevorzugt Axialventilatoren zu Einsatz kommen, bei welchen die Drehachse eines Laufrads der Ventilatoreinheit parallel bzw. axial zu einem Luftstrom verläuft. Bei den Mitteln zur Erhöhung der Wärmetauschleistung kann es sich auch um Pumpeinheiten handeln, welche die Kühlflüssigkeit durch die Wärmetauscher-Einheit fördern. Auch eine Kombination aus Pumpeinheit(en) und Ventilatoreinheit(en) ist möglich. Durch die Mittel zur Erhöhung der Wärmetauschleistung kann die Wärmeabgabe der Kühlflüssigkeit in der Wärmetauscher-Einheit gesteigert werden bzw. in anderen Worten die Kühlung der Kühlflüssigkeit in der Wärmetauscher-Einheit vergrößert werden, sodass die Kühlflüssigkeit stärker und/oder schneller abgekühlt wird.

Um die erforderliche Kühlleistung im Regelbetriebszustand des Transformators zu regeln, insbesondere die Leistung der Mittel zur Erhöhung der Wärmetauschleistung, ist gemäß dem Stand der Technik eine Steuerungseinrichtung vorgesehen. Ein Eingangssignal der Steuerungseinrichtung ist dabei eine im Transformator oder im Kühlsystem gemessene obere Temperatur Tₒ, bei der es sich beispielsweise um eine obere Temperatur der Kühlflüssigkeit, insbesondere am Eingang der ersten Wärmetauscher-Einheit oder im Kopfbereich des Transformators, bevorzugt eine Heißöltemperatur, und/oder um eine Kerntemperatur des Transformators und/oder in der zumindest einen Transformatorwicklung gemessene Temperaturen, beispielsweise zur Erkennung von Hotspots, handeln kann. Wird etwa eine Überschreitung eines vordefinierten ersten oberen Schwellwerts durch die gemessene obere Temperatur Tₒ festgestellt, kann die Steuerungseinrichtung eine Ventilatoreinheit und/oder eine Pumpeinheit aktivieren bzw. die Leistung der Ventilatoreinheit und/oder der Pumpeinheit erhöhen, um die Wärmetauschleistung der Wärmetauscher-Einheit zu erhöhen bzw. den Wärmeabtransport aus den erwärmten Bereichen des Transformators zur Wärmetauscher-Einheit zu verbessern.

Während die Abhängigkeit der Leistung der Mittel zur Erhöhung der Wärmetauschleistung von der gemessenen oberen Temperatur Tₒ in einer Mehrzahl von Betriebszuständen als vorteilhaft anzusehen ist, sind dennoch Betriebszustände möglich, in welchen eine derartige Regelung erhebliche Nachteile verursacht. Beispielsweise kann es bei niedrigen Umgebungstemperaturen und einer dadurch bedingten niedrigen Betriebstemperatur, insbesondere in einer Startphase, also im Rahmen der Inbetriebnahme oder des Hochfahrens, des Transformators aus einem Kaltzustand dazu kommen, dass sich nur ein Teil der durch die Umgebungstemperatur zähflüssig gewordenen Kühlflüssigkeit durch die im Transformator entstehende Wärme aufheizt und aufgrund der temperaturabhängigen niedrigeren Viskosität beginnt zu zirkulieren bzw. zirkuliert. Dabei kann es durch die bereits erhitzte zirkulierende Kühlflüssigkeit zu einer hohen gemessenen oberen Temperatur Tₒ kommen, da ein Großteil der Kühlflüssigkeit aufgrund der tiefen Temperatur im äußeren Kühlkreis noch nicht zirkuliert und somit nicht oder nur in äußerst geringem Umfang zum Wärmeabtransport beiträgt. In diesem Fall ist eine Aktivierung der Mittel zur Erhöhung der Wärmetauschleistung bzw. eine Erhöhung der Leistung der Mittel zur Erhöhung der Wärmetauschleistung als nachteilig anzusehen, da die zusätzliche Kühlung der durch die zumindest eine Wärmetauscher-Einheit strömenden Kühlflüssigkeit die Wärmeabfuhr aus dem Inneren des Transformators verhindert. Dadurch, dass nur ein geringer Teil der Kühlflüssigkeit zirkuliert, kann es trotz der aktiven Kühlung in der zumindest einen Wärmetauscher-Einheit zu einer Überhitzung des Transformators kommen, da die im Transformator entstehende Wärme nicht durch den zirkulierenden Teil der Kühlflüssigkeit abtransportiert werden kann. Darüberhinaus kann es zu einer Situation kommen, in welcher die zumindest eine Wärmetauscher-Einheit aufgrund der der niedrigen Temperatur geschuldeten hohen Viskosität der Kühlflüssigkeit nicht oder nicht ausreichend durchströmt wird, man spricht hier vom sogenannten "Einfrieren" der Wärmetauscher-Einheit, sodass die zusätzliche Kühlung der Wärmetauscher-Einheit ein "Auftauen" der Wärmetauscher-Einheit verhindert. Unter Kaltstart ist insbesondere ein Einschaltvorgang des Transformators nach langer Lagerung in kaltem Zustand bei niedrigen Umgebungstemperaturen zu verstehen.

### AUFGABE DER ERFINDUNG

Es ist daher eine Aufgabe der Erfindung ein Verfahren zur Regelung des Kühlsystems eines Transformators zur Verfügung zu stellen, welches die Nachteile des Stands der Technik überwindet und eine verbesserte Charakteristik des Kühlsystems bei niedrigen Umgebungstemperaturen erreicht, insbesondere in einer Startphase aus einem Kaltzustand.

Eine weitere Aufgabe besteht darin, wenn die Kaltbedingungen nicht mehr zutreffen, eine vorzeitige Kühlung zu bewirken, bevor ein hoher Laststrom zu hohen Temperaturen führt.

### DARSTELLUNG DER ERFINDUNG

Diese Aufgabe wird in einem Verfahren zum Betreiben eines Kühlsystems eines zumindest eine Transformatorwicklung aufweisenden Transformators, vorzugsweise eines Leistungstransformators oder einer Drossel,
wobei eine Kühlflüssigkeit des Kühlsystems die zumindest eine Transformatorwicklung, sowie gegebenenfalls einen Transformatorkern, umgibt und in einem Regelbetriebszustand des Transformators die Kühlflüssigkeit im Kühlsystem zirkuliert, wobei zumindest die in der zumindest einen Transformatorwicklung entstehende Wärme mittels der zirkulierenden Kühlflüssigkeit an eine umgebende Atmosphäre abgegeben wird, das Kühlsystem umfassend
- zumindest eine von der Kühlflüssigkeit durchströmbare Wärmetauscher-Einheit zur Abgabe von Wärme von der Kühlflüssigkeit an die umgebende Atmosphäre,
- mit der zumindest einen Wärmetauscher-Einheit zusammenwirkende Mittel zur Erhöhung einer
Wärmetauschleistung der zumindest einen Wärmetauscher-Einheit,
- eine Steuerungseinheit zur Regelung der Wärmetauschleistung der zumindest einen Wärmetauscher-Einheit, wobei eine obere Temperatur Tₒ im Kühlsystem und/oder am Transformator gemessen wird und die Steuerungseinheit in einem Regelbetriebszustand eine Leistung der Mittel zur Erhöhung der Wärmetauschleistung der zumindest einen Wärmetauscher-Einheit in Abhängigkeit der gemessenen oberen Temperatur Tₒ regelt, dadurch gelöst, dass im Kühlsystem eine untere Temperatur Tᵤ der Kühlflüssigkeit gemessen wird und die Steuerungseinheit unabhängig von der gemessenen oberen Temperatur Tₒ die Mittel zur Erhöhung der Wärmetauschleistung der zumindest einen Wärmetauscher-Einheit nicht aktiviert und/oder die Mittel zur Erhöhung der Wärmetauschleistung der zumindest einen Wärmetauscher-Einheit mit einer gegenüber dem Regelbetriebszustand verringerten Leistung betreibt, wenn die untere Temperatur Tᵤ der Kühlflüssigkeit während des Betriebs des Transformators unterhalb eines unteren Schwellwerts Sᵤ liegt. Durch die schnellere Angleichung des Temperaturniveaus der Kühlflüssigkeit dank der reduzierten bzw. nicht vorhandenen zusätzlichen Kühlung durch die Mittel zur Erhöhung der Wärmetauschleistung, wird die Dauer, bis zu welcher die gesamte Kühlflüssigkeit im Kühlsystem zirkuliert, verringert, sodass die Gefahr der Überhitzung des Transformators bei einem Kaltstart drastisch reduziert werden kann. Gleiches gilt für den Fall, dass der Transformator mit geringer Leistung bei tiefen Umgebungstemperaturen betrieben wird, sodass sich eine niedrige Betriebstemperatur einstellt, und der Transformator aus diesem Zustand hochgefahren wird.

Durch die erfindungsgemäße Erfassung der unteren Temperatur Tᵤ der Kühlflüssigkeit und den Vergleich der gemessenen unteren Temperatur mit einem, in der Regel vordefinierten und von der Kühlflüssigkeit bzw. vom Transformatordesign abhängigen, unteren Schwellwert Sᵤ ist es möglich, die Steuerungseinrichtung auch beim Hochfahren bei tiefen Umgebungstemperaturen möglichst optimiert zu betreiben, indem eine tiefe Betriebstemperatur und/oder ein sogenannter Kaltstart, sprich ein Einschaltvorgang nach langer Lagerung in kaltem Zustand bei niedrigen Umgebungstemperaturen, von der Steuerungseinrichtung erkannt und bei der Regelung entsprechend berücksichtigt werden kann. Es versteht sich dabei von selbst, dass die Steuerungseinrichtung durch Berücksichtigung einer Regelgröße auch regelungstechnische Aufgaben durchführen kann. Durch die Deaktivierung oder die Verringerung der Leistung bzw. der Kühlleistung der Mittel zur Erhöhung der Wärmetauschleistung wird die Kühlleistung der zumindest einen Wärmetauscher-Einheit verringert, sodass die Kühlflüssigkeit mit im Vergleich zum Regelbetriebszustand höherer Temperatur aus der Wärmetauscher-Einheit austritt und in den Transformator eintritt, sodass sich die, vorzugsweise in einem Gehäuse befindliche, übrige Kühlflüssigkeit mit niedrigerem Temperaturniveau schneller erwärmt. Somit können Bereiche der Kühlflüssigkeit mit extrem hoher Viskosität reduziert werden und kann sich schneller eine Zirkulation der möglichst gesamten Kühlflüssigkeit im Kühlsystem einstellen. Sobald die gemessene untere Temperatur Tᵤ den unteren Schwellwert Sᵤ erreicht oder den unteren Schwellwert Sᵤ um einen vordefinierten Betrag, beispielsweise 5°C, 10°C oder 15°C, bevorzugt zumindest 20°C, bzw. einen dazwischen liegenden Wert überschreitet, kann die Steuerungseinrichtung wieder auf die herkömmliche Regelung der Mittel zur Erhöhung der Wärmetauschleistung in Abhängigkeit der gemessenen oberen Temperatur umgeschaltet werden bzw. können zu diesem Zwecke die Mittel zur Erhöhung der Wärmetauschleistung aktiviert werden.

Wenn die Mittel zur Erhöhung der Wärmetauschleistung zumindest eine Ventilatoreinheit umfassen, so kann die Kühlleistung einerseits durch eine Verringerung der Drehzahl und andererseits durch das Deaktivieren einzelner Ventilatoreinheiten, insbesondere einzelner Kühlstufen, beeinflusst werden. Wenn die Mittel zur Erhöhung der Wärmetauschleistung zumindest eine Pumpeinheit umfassen, so kann die Kühlleistung einerseits durch die Verringerung der Pumpleistung und andererseits durch das Deaktivieren einzelner Pumpeinheiten, insbesondere einzelner Kühlstufen, beeinflusst werden. Selbstverständlich können auch Pumpeinheiten und Ventilatoreinheiten gemeinsam gesteuert bzw. geregelt werden.

In einer Ausführungsvariante der Erfindung ist daher vorgesehen, dass die Mittel zur Erhöhung der Wärmetauschleistung der zumindest einen Wärmetauscher-Einheit zumindest eine Ventilatoreinheit und/oder zumindest eine die Kühlflüssigkeit im Regelbetriebszustand durch die zumindest eine Wärmetauscher-Einheit fördernde Pumpeinheit umfassen. Je nach erforderlicher maximaler Kühlleistung bzw. abhängig vom Transformatordesign können entsprechend beispielsweise ODAN, ODAF, OFAF oder ONAF Kühlstufen realisiert werden.

Eine Ausführungsvariante der Erfindung sieht vor, dass der Transformator innerhalb eines mit der Kühlflüssigkeit gefüllten Gehäuses angeordnet ist und die Wärmetauscher-Einheit in einem mit dem Gehäuse strömungsverbundenen Kühlkreislauf angeordnet ist, wobei die Kühlflüssigkeit im Regelbetriebszustand durch den Kühlkreislauf zirkuliert. Das die Kühlflüssigkeit enthaltende und den Transformator umgebende Gehäuse, auch als Kessel bezeichnet, fungiert in der Regel als primärer Wärmetauscher, sodass, insbesondere bei geringer Zirkulation der Kühlflüssigkeit innerhalb des Kühlsystems, über das Gehäuse Wärme von der Kühlflüssigkeit aufgenommen bzw. an die Umgebung abgegeben werden kann. Durch die Anbindung der zumindest einen Wärmetauscher-Einheit an das Gehäuse mittels des Kühlkreislaufs, kann in effizienter Art und Weise Wärme an die Umgebung abgegeben werden und kann die zumindest eine Wärmetauscher-Einheit außerhalb des Gehäuses angeordnet werden. Vorteilhaft ist es dabei, wenn jede Wärmetauscher-Einheit einen mit dem Gehäuse strömungsverbundenen Zulauf für Kühlflüssigkeit mit höherer Temperatur und einen Rücklauf für mittels der Wärmetauscher-Einheit gekühlte Kühlflüssigkeit aufweist. Sind mehrere Wärmetauscher-Einheiten vorgesehen, so können diese beispielsweise parallel miteinander verbunden sein.

Um durch die Erfassung der unteren Temperatur Tᵤ einen möglichst aussagekräftigen Wert zu erhalten, über welchen in der Steuerungseinrichtung möglichst verlässlich ein Kaltstart bei niedrigen Umgebungstemperaturen und entsprechend niedrigen Betriebstemperaturen detektiert werden kann, ist in einer weiteren Ausführungsvariante der Erfindung vorgesehen, dass die untere Temperatur Tᵤ der Kühlflüssigkeit in jenem Bereich des Kühlsystems, vorzugsweise in jenem Bereich des Gehäuses, gemessen wird, in welchem die tiefste Temperatur der Kühlflüssigkeit zu erwarten ist. Vorzugsweise wird die untere Temperatur mittels eines in jenem Bereich angeordneten Temperatursensors gemessen. Die Bereiche des Kühlsystems in denen die tiefsten Temperaturen der Kühlflüssigkeit vorherrschen, bilden sich in der Regel im Bereich der Wärmetauscher-Einheit selbst bzw. im Inneren des Gehäuses im Bereich unterhalb der Transformatorwicklungen, wo üblicher Weise die über die Wärmetauscher-Einheit gekühlte Kühlflüssigkeit zurück in das Gehäuse strömt, um die zumindest eine Transformatorwicklung zu kühlen, also im Bodenbereich des Gehäuses, aus, da in diesen Bereichen wenige Wärmequellen vorliegen bzw. erst beim Durchströmen der Wärmequellen von unten nach oben die Wärmeenergie von den Wärmequellen, insbesondere von der zumindest einen Transformatorwicklung bzw. dem Transformatorkern, an die Kühlflüssigkeit in Form von Wärme abgeführt wird. Entsprechend werden tiefer liegende Bereiche weniger schnell erwärmt. Gleichfalls sinkt kältere Kühlflüssigkeit aufgrund der höheren Dichte und der höheren Viskosität ab. Die genaue Temperaturverteilung in den unterschiedlichen Bereichen des Transformators ist abhängig vom Design des Transformators, insbesondere von der Gestaltung des Gehäuses und der Zuführung der Kühlflüssigkeit zu den Wärmequellen bzw. den Transformatorwicklungen. Durch die Erfassung der unteren Temperatur der Kühlflüssigkeit im Bereich der tiefsten zu erwartenden Temperatur der Kühlflüssigkeit kann weiters sichergestellt werden, dass die Kühlleistung der Wärmetauscher-Einheit mittels der Mittel zur Erhöhung der Wärmetauschleistung erst dann erhöht wird, wenn die Temperatur der Kühlflüssigkeit im entsprechenden Bereich des Kühlsystems, vorzugsweise im gesamten Kühlsystem, über dem unteren Schwellwert Sᵤ liegt.

In einer weiteren Ausführungsvariante ist vorgesehen, dass die untere Temperatur Tᵤ mittels eines ersten Temperatursensors gemessen wird, wobei der erste Temperatursensor in einem Bodenbereich des Gehäuses und/oder im Bereich der Einmündung eines Rücklaufs des Kühlkreislaufs in das Gehäuse angeordnet ist. Erfahrungsgemäß stellt der Bodenbereich des Gehäuses des Transformators oder der Bereich des Gehäuses, in welchem die im Kühlkreislauf gekühlte Kühlflüssigkeit über den Rücklauf wieder zurück ins Gehäuse gelangt, jenen Bereich dar, in welchem die tiefste Temperatur der Kühlflüssigkeit zu erwarten ist, da hier große Volumina an Kühlflüssigkeit in fester oder zähflüssiger Form die Erwärmung verzögern können und keine oder schwache Wärmequellen vorhanden sind. Natürlich ist es denkbar, dass auch mehr als ein Temperatursensor vorgesehen sein kann, um die tiefste Flüssigkeitstemperatur oder verschiedene tiefe Temperaturen zu erfassen und entsprechend die untere Temperatur Tᵤ genauer bestimmen zu können. Beispielsweise können zwei, drei oder vier Temperatursensoren vorgesehen sein, wobei die untere Temperatur Tᵤ als Minimalwert oder als Durchschnittswert der unterschiedlichen Messwerte definiert sein kann.

Gemäß einer weiteren Ausführungsvariante des erfindungsgemäßen Verfahrens ist vorgesehen, dass die Mittel zur Erhöhung der Wärmetauschleistung der zumindest einen Wärmetauscher-Einheit zumindest eine, die Kühlflüssigkeit im Regelbetriebszustand durch die zumindest eine Wärmetauscher-Einheit fördernde, Pumpeinheit umfassen, wobei die zumindest eine Pumpeinheit von der Steuerungseinheit aktiviert wird, wenn die untere Temperatur Tᵤ der Kühlflüssigkeit während des Betriebs des Transformators unterhalb des unteren Schwellwerts Sᵤ liegt und oberhalb einer unteren Grenztemperatur Gᵤ liegt. Durch die Aktivierung der zumindest einen Pumpeinheit durch die Steuerungseinrichtung, wenn aufgrund der gemessenen unteren Temperatur Tᵤ ein kritisches Kaltverhalten detektiert wurde, wird durch den Pumpendruck eine verbesserte Strömung der Kühlflüssigkeit in den kalten Bereichen des Kühlsystems, insbesondere in der zumindest einen Wärmetauscher-Einheit, in Gang gesetzt als allein durch die natürliche durch die Erwärmung der Kühlflüssigkeit durch die Wärmequellen, insbesondere die Transformatorwicklungen bedingte, Thermosyphonwirkung. Weiters ist die in der Pumpeinheit freigesetzte Wärme für den Erwärmungsprozess der Kühlflüssigkeit förderlich. Die zumindest eine Pumpeinheit kann im Regelbetriebszustand die Zirkulation der Kühlflüssigkeit durch die zumindest eine Wärmetauscher-Einheit und/oder durch den Kühlkreislauf unterstützen. Weiters ist es denkbar, dass die Leistung der zumindest einen Pumpeinheit in Abhängigkeit von der gemessenen oberen Temperatur Tₒ und/oder unteren Temperatur Tᵤ geregelt wird, um die Durchmischung zu verbessern. Im Hinblick auf die untere Grenztemperatur Gᵤ wird der Übersichtlichkeit halber auf den nachfolgenden Absatz verwiesen.

Abhängig von Art und Typ der im Transformator befindlichen Kühlflüssigkeiten gibt es Betriebstemperaturen bei denen der dauerhafte Betrieb von Pumpeinheiten nicht möglich bzw. nicht erwünscht ist. Dies ist beispielsweise bei tiefen Betriebstemperaturen der Fall, bei denen die Viskosität der Kühlflüssigkeit so hoch ist, dass aufgrund der fehlenden Zirkulation der Kühlflüssigkeit durch die Pumpeinheit, die Pumpeinheit nicht ausreichend gekühlt werden würde und die Pumpeinheit daher zumindest vorübergehend vom Motorschutz deaktiviert werden würde. Die Temperatur bei der die Kühlflüssigkeit dieses Verhalten aufweist wird in der Folge als untere Grenztemperatur Gᵤ bezeichnet, welche unterhalb des unteren Schwellwerts Sᵤ liegt. Beispielsweise kann es sich beim unteren Grenzwert bzw. bei der unteren Grenztemperatur Gᵤ um die Stocktemperatur der Kühlflüssigkeit handeln.

In einer weiteren Ausführungsvariante der Erfindung ist vorgesehen, dass die Mittel zur Erhöhung der Wärmetauschleistung der zumindest einen Wärmetauscher-Einheit zumindest eine, die Kühlflüssigkeit im Regelbetriebszustand durch die zumindest eine Wärmetauscher-Einheit fördernde, Pumpeinheit umfassen, wobei die zumindest eine Pumpeinheit von der Steuerungseinheit intervallmäßig aktiviert und deaktiviert wird, wenn die untere Temperatur Tᵤ der Kühlflüssigkeit während des Betriebs des Transformators unterhalb einer unteren Grenztemperatur Gᵤ liegt, welche untere Grenztemperatur Gᵤ niedriger ist als der untere Schwellwert Sᵤ. Durch den intervallmäßigen Betrieb, bei dem aktivierte und deaktivierte Zeitabschnitte einander abwechseln, kann einerseits durch die Deaktivierung die Überhitzung der zumindest einen Pumpeinheit verhindert werden und andererseits kann die durch den Betrieb der zumindest einen Pumpeinheit freigesetzte Wärme den Erwärmungsprozess der Kühlflüssigkeit fördern. Vorteilhaft ist es dabei, wenn aktivierte Zeit und deaktivierte Zeit in etwa gleich lang sind, wobei auch abweichende Aufteilungen von zwischen 75% aktiver Zeit und 25% deaktivierter Zeit bzw. umgekehrt denkbar sind. In der Regel wird die aktive Zeit durch eine Maximalzeit beschränkt, bei welcher trotz der hohen Viskosität der Kühlflüssigkeit noch keine Überhitzung auftritt. Besonders bevorzugt beträgt die aktive Zeit zwischen 5 min und 20 min, insbesondere zwischen 10 min und 15 min.

Um bei einem Transformator, dessen Mittel zur Erhöhung der Wärmetauschleistung zumindest eine Ventilatoreinheit und zumindest eine Pumpeinheit aufweisen eine Beschädigung der zumindest einen Pumpeinheit zu verhindern bzw. die zuvor beschriebenen Effekte zu erreichen, ist in einer weiteren Ausführungsvariante der Erfindung daher vorgesehen, dass die Mittel zur Erhöhung der Wärmetauschleistung der zumindest einen Wärmetauscher-Einheit zumindest eine Ventilatoreinheit und zumindest eine, die Kühlflüssigkeit im Regelbetriebszustand durch die zumindest eine Wärmetauscher-Einheit fördernde, Pumpeinheit umfassen, wobei die Steuerungseinheit
- die Ventilatoreinheit deaktiviert und die Pumpeinheit entweder deaktiviert oder intervallmäßig aktiviert und deaktiviert, wenn die untere Temperatur Tᵤ der Kühlflüssigkeit unterhalb einer unteren Grenztemperatur Gᵤ liegt, welche untere Grenztemperatur Gᵤ niedriger ist als der untere Schwellwert Sᵤ;
- die zumindest eine Ventilatoreinheit deaktiviert und die zumindest eine Pumpeinheit, vorzugsweise dauerhaft, aktiviert, wenn die untere Temperatur Tᵤ der Kühlflüssigkeit zwischen der unteren Grenztemperatur Gᵤ und dem unteren Schwellwert Sᵤ liegt;
- die zumindest eine Ventilatoreinheit und die zumindest eine Pumpeinheit basierend auf dem Regelbetriebszustand betreibt, wenn die untere Temperatur Tᵤ oberhalb des unteren Schwellwerts Sᵤ liegt.

Durch die entsprechende Durchführung des Verfahrens wird einerseits eine Beschädigung der Pumpeinheiten verhindert, indem diese bei Temperaturen unterhalb der unteren Grenztemperatur Gᵤ entweder gar nicht oder nur intervallmäßig in Betrieb genommen werden. Erst wenn die untere Temperatur Tᵤ der Kühlflüssigkeit über die untere Grenztemperatur Gᵤ angestiegen ist und damit eine entsprechend niedrigere Viskosität aufweist, bleibt die zumindest eine Pumpeinheit ständig aktiviert, um die zuvor beschriebenen Effekte zu erreichen. Umfassen die Mittel zur Erhöhung der Wärmetauschleistung auch Ventilatoreinheiten, so bleiben diese aus den zuvor geschilderten Gründen deaktiviert, bis die untere Temperatur Tᵤ oberhalb des unteren Schwellwerts Sᵤ liegt.

Da der temperaturabhängigen Viskosität der Kühlflüssigkeit eine entscheidende Rolle bei der Zirkulation der Kühlflüssigkeit im Kühlsystem zukommt, ist in einer weiteren Ausführungsvariante vorgesehen, dass der untere Schwellwert Sᵤ in einem Bereich von zwischen 10°C und 40°C, bevorzugt zwischen 20°C und 30°C,oberhalb einer Stocktemperatur der Kühlflüssigkeit liegt. Unter Stockwert wird dabei jene Temperatur der Kühlflüssigkeit verstanden bei welcher die Viskosität der Kühlflüssigkeit so groß ist, dass bei einer Probe innerhalb eines gewissen Zeitraums, insbesondere innerhalb von 10 s, keine Bewegung der Probe mehr stattfindet. Der Stockpunkt von Mineralöl kann beispielsweise bei -45°C liegen, der Stockpunkt von biologischen Flüssigkeiten nach langer Lagerung bei tiefen Temperaturen zum Beispiel bei etwa -25°C. Durch einen Temperaturbereich oberhalb dieses Stockwerts oder Stockpunkts kann ein unerwünschtes Kaltverhalten der Kühlflüssigkeit in einfacher Art und Weise zuverlässig detektiert werden und entsprechend erfindungsgemäß Maßnahmen gesetzt werden, um negative Auswirkungen auf den Transformator, wie ein Überhitzen der Transformatorwicklung, zu unterbinden. Liegt der Abstand der gemessenen unteren Temperatur Tᵤ zum Stockwert außerhalb des angegebenen Temperaturbereichs, bevorzugt mehr als 20°C über diesem, so ist die Kühlflüssigkeit ausreichend fließfähig, um eine Zirkulation der Kühlflüssigkeit im Kühlsystem sicherzustellen.

Anstatt der vorgenannten Definition über den Stockwert kann der untere Schwellwert Sᵤ auch in Abhängigkeit der dynamischen Viskosität der Kühlflüssigkeit definiert werden. Daher ist in einer weiteren Ausführungsvariante der Erfindung vorgesehen, dass der untere Schwellwert Sᵤ in einem Bereich von zwischen 10°C und 40°C, bevorzugt zwischen 20°C und 30°C, oberhalb jener Temperatur liegt, bei welcher Temperatur die kinematische Zähigkeit der Kühlflüssigkeit größer gleich 1800 mm²/s ist. Dieser Wert wird unter anderem von der konstruktiven Ausführung des Kühlkreislaufs beeinflusst.

Besonders bevorzugt ist es, insbesondere im Hinblick auf die zuvor erwähnten Temperaturbereiche, wenn die Kühlflüssigkeit ausgewählt ist aus der Gruppe umfassend mineralölbasierte Flüssigkeiten, synthetisch hergestellte Öle, insbesondere Silikonöl, synthetisch hergestellte Esther, biologisch hergestellte Flüssigkeiten. Die Auswahl der Kühlflüssigkeit erfolgt in Abhängigkeit vom Einsatzort des Transformators und vom Design bzw. Aufbau des Transformators.

Die Messung der unteren Temperatur Tᵤ kann zusätzlich zur Kalt-Temperaturproblematik der Kühlflüssigkeit auch in weiteren Anwendungsbereichen vorteilhaft sein. So sieht eine weitere Ausführungsvariante der Erfindung vor, dass ein Stromwert gemessen wird, der den auf einer Primärseite oder Sekundärseite des Transformators durch den Transformator fließenden Strom angibt oder proportional zu diesem Strom ist, und dass die Leistung der Mittel zur Erhöhung der Wärmetauschleistung durch die Steuerungseinrichtung unabhängig von der gemessenen zumindest einen oberen Temperatur Tₒ im Vergleich zum Regelbetriebszustand erhöht wird, wenn der gemessene Stromwert einen oberen Schwellwert überschreitet und wenn die untere Temperatur Tᵤ der Kühlflüssigkeit oberhalb des unteren Schwellwerts Sᵤ liegt. Durch die Bestimmung des Stromwerts kann eine eventuelle Hitzeentwicklung im Transformator verzögert werden, bevor diese zu einem signifikanten Temperaturanstieg der oberen Temperatur Tₒ geführt hat bzw. bevor ein, vorzugsweise erster, oberer Schwellwert der oberen Temperatur Tₒ überschritten wird, bei dem es im Regelbetriebszustand zu einer erhöhten Kühlung kommen würde. Das Vermeiden hoher Temperaturen in der zumindest einen Transformatorwicklung verringert einerseits die thermische Alterung und ermöglicht andererseits eine verlängerte Betriebsdauer bei Überlastbedingungen, bevor es zu einem Ausfall bzw. zu einer Abschaltung kommt. Durch das Überprüfen, ob die gemessene untere Temperatur Tᵤ oberhalb des unteren Schwellwerts Sᵤ liegt, ist wiederum der Kaltstartbetrieb abgesichert. Weiters kann außerhalb des Kaltzustandes der Laststrom als zusätzliche Steuergröße eine vorzeitige Kühlung auslösen, um dadurch die Erwärmung bei kurzzeitigen Überlasten zu reduzieren bzw. die zulässige Dauer der Überlast zu erhöhen

Die Erfindung betrifft auch eine Steuerungseinrichtung für ein Kühlsystem eines zumindest eine Transformatorwicklung aufweisenden Transformators, vorzugsweise eines Leistungstransformators, wobei das Kühlsystem eine Kühlflüssigkeit enthält, welche während des Betriebs des Transformators innerhalb des Kühlsystems zirkuliert, wobei die Steuerungseinrichtung zumindest die Leistung von mit einer Wärmetauscher-Einheit zusammenwirkenden Mittel zur Erhöhung der Wärmetauschleistung der zumindest einen Wärmetauscher-Einheit regelt, wobei die zumindest eine Wärmetauscher-Einheit ausgebildet ist, um Wärme von der Kühlflüssigkeit an die umgebende Atmosphäre abzugeben. Die eingangs erwähnte Aufgabe wird dabei dadurch gelöst, dass die Steuerungseinrichtung mit einem ersten Temperatursensor zur Messung einer unteren Temperatur Tᵤ der Kühlflüssigkeit verbunden ist und dass die Steuerungseinrichtung zur Durchführung des zuvor beschriebenen erfindungsgemäßen Verfahrens eingerichtet ist. Insbesondere kann die Steuerungseinrichtung auf Auslösung von Relais basieren oder Mittel zur Ausführung von Software-Lösungen, beispielsweise Mikroprozessoren, umfassen, um gemessene Werte miteinander zu vergleichen und Regelprozeduren auszulösen. Ebenfalls ist es denkbar, dass die Steuerungseinrichtung eine Speichereinheit aufweist, in welcher zumindest der untere Schwellwert Sᵤ abgespeichert ist.

Gleichermaßen betrifft die Erfindung einen Transformator, vorzugsweise Leistungstransformator oder Drossel, umfassend zumindest eine Transformatorwicklung und gegebenenfalls einen Transformatorkern sowie ein Kühlflüssigkeit enthaltendes Kühlsystem zur Kühlung der zumindest einen Transformatorwicklung, wobei das Kühlsystem zumindest eine Wärmetauscher-Einheit zur Abgabe von Wärme von der Kühlflüssigkeit an eine umgebende Atmosphäre sowie mit der Wärmetauscher-Einheit zusammenwirkende Mittel zur Erhöhung der Wärmetauschleistung der zumindest einen Wärmetauscher-Einheit sowie eine Steuerungseinheit zur Regelung zumindest der Leistung der Mittel zur Erhöhung der Wärmetauschleistung der zumindest einen Wärmetauscher-Einheit, wobei erfindungsgemäß vorgesehen ist, dass der Transformator einen ersten Temperatursensor zur Bestimmung einer unteren Temperatur Tᵤ des Kühlmittels aufweist und dass die Steuerungseinrichtung wie zuvor beschrieben erfindungsgemäß ausgebildet ist. Insbesondere ist es vorteilhaft, wenn der erste Temperatursensor im Bodenbereich des Gehäuses des Transformators angeordnet ist.

Schließlich betrifft die Erfindung auch ein Computerprogrammprodukt, umfassend Befehle, welche bewirken, dass die erfindungsgemäße Steuerungseinrichtung die gemessene untere Temperatur Tᵤ der Kühlflüssigkeit mit dem unteren Schwellwert Sᵤ vergleicht und ein erstes Steuerungssignale und/oder ein Ein/Aus-Signale an die Mittel zur Erhöhung der Wärmetauschleistung der zumindest einen Wärmetauscher-Einheit sendet, um das erfindungsgemäße Verfahren auszuführen. Es versteht sich dabei von selbst, dass über das Computerprogrammprodukt lediglich jene Aufgaben der Steuerungseinrichtung geregelt werden können, welche direkt von dieser beeinflussbar sind. So ist beispielsweise - sofern keine Pumpeinheit vorgesehen ist bzw. die Pumpeinheit nicht aktiviert ist, sodass die Zirkulation der Kühlflüssigkeit auf der natürlichen Konvektion beruht - die Zirkulation der Kühlflüssigkeit über die Steuerungseinrichtung maximal indirekt beeinflussbar. Ein Steuerungssignal und/oder ein Ein/Aus-Signal kann durch das Computerprogrammprodukt generiert werden und über jegliche Art von Signalübertragung, beispielsweise kabellos oder kabelgebunden, übertragen werden. Mittels eines Ein/Aus-Signals können entsprechend dem eingangs beschriebenen Verfahren die Mittel zur Erhöhung der Wärmetauschleistung der Wärmetauscheinheit beispielsweise erst dann aktiviert werden, wenn die gemessene untere Temperatur Tᵤ oberhalb des unteren Schwellwerts Sᵤ liegt bzw. oberhalb des vordefinierten Bereichs über dem unteren Schwellwert Sᵤ liegt. Sofern die Mittel zur Erhöhung der Wärmetauschleistung mehrere Aggregate oder Einheiten, beispielsweise mehrere Ventilatoreinheiten und/oder mehrere Pumpeinheiten, aufweisen, können einzelne Aggregate bzw. Einheiten aktiviert werden während andere deaktiviert bleiben. Mittels der Leistungssignale kann die Leistung der Mittel zur Erhöhung der Wärmetauschleistung gegenüber dem Regelbetriebszustand verringert bzw. gedrosselt werden, wenn die gemessene untere Temperatur Tᵤ unterhalb des unteren Schwellwerts Sᵤ liegt, bzw. erhöht werden, wenn die gemessene untere Temperatur Tᵤ oberhalb des unteren Schwellwerts Sᵤ liegt bzw. oberhalb des vordefinierten Bereichs liegt.

Selbstverständlich kann das Computerprogrammprodukt auch Befehle enthalten, welche für die Regelung des Kühlsystems im Regelbetriebszustand erforderlich sind.

Eine weitere Ausführungsvariante des Computerprogrammprodukts sieht vor, dass das Computerprogrammprodukt Befehle umfasst, welche bewirken, dass die Steuerungseinrichtung ein zweites Leistungssignal und/oder ein zweites Ein/Aus-Signal an die zumindest eine Pumpeinheit sendet. Wenn das Kühlsystem, wie zuvor beschrieben, zumindest eine Pumpeinheit umfasst, kann das Verfahren vorsehen, dass die zumindest eine Pumpeinheit aktiviert wird, wenn die untere Temperatur Tᵤ der Kühlflüssigkeit während des Betriebs des Transformators unterhalb des unteren Schwellwerts Sᵤ, vorzugsweise jedoch oberhalb einer unteren Grenztemperatur Gᵤ, liegt. Entsprechend können die Befehle des Computerprogrammprodukts ausgebildet sein, das zweite Ein/Aus-Signal zur Aktivierung der Pumpeinheit zu generieren und/oder die Leistung der zumindest einen Pumpeinheit während des Betriebs über das generierte zweite Steuerungssignal und über eine beliebige Art der Signalübertragung, beispielsweise kabellos oder kabelgebunden, an die zumindest eine Pumpeinheit zu übertragen.

### KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigt:
- Fig. 1: eine schematische Darstellung eines erfindungsgemäßen Transformators;
- Fig. 2: eine schematische Darstellung der unteren Temperatur.

### WEGE ZUR AUSFÜHRUNG DER ERFINDUNG

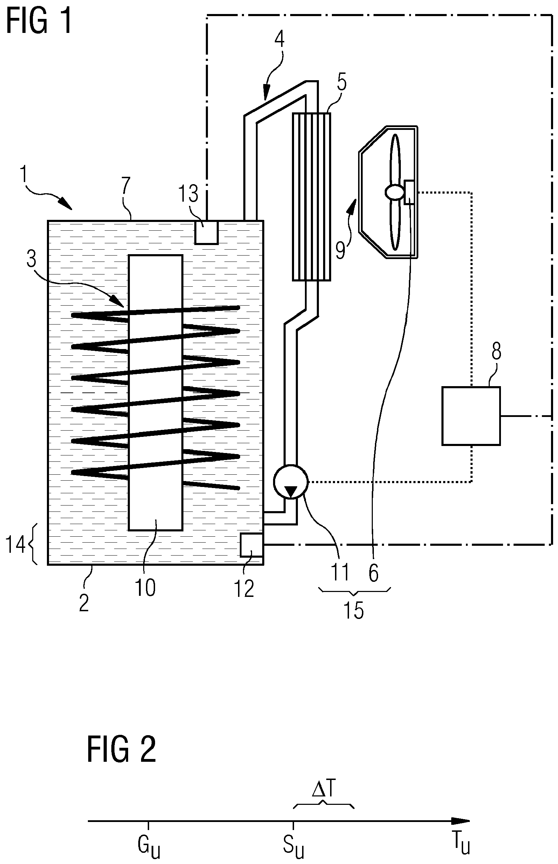

Fig. 1 zeigt eine schematische Darstellung eines erfindungsgemäßen Transformators 1, der über eine Transformatorwicklung 3 verfügt, welche um einen Transformatorkern 10 gewickelt ist. Die Transformatorwicklung 3 umfasst zumindest eine Unter- sowie zumindest eine Oberspannungswicklung, welche in der Figur nicht weiter dargestellt sind. Es ist auch denkbar, dass der Transformator 1 als Drossel ausgebildet ist. Weiters kann die Transformatorwicklung 3, genauer deren elektrischer Leiter, zur elektrischen Isolierung mit Zellulosepapier umwickelt sein.

Die Transformatorwicklung 3 und der Transformatorkern 10 sind in einem Gehäuse 2 angeordnet, welches mit einer Kühlflüssigkeit 7 gefüllt ist. Die Kühlflüssigkeit 7 dient neben der nachfolgend näher beschriebenen Kühlung des Transformators 1, sprich der Kühlung zumindest der Transformatorwicklung 3 und des Transformatorkerns 10, auch zur elektrischen Isolation des Transformators 1. Besonders vorteilhaft ist es daher, wenn es sich bei der Kühlflüssigkeit 7 um eine für Transformatoren geeignete Isolier- und Kühlflüssigkeit, beispielsweise ein Transformatoröl, handelt. Typischerweise handelt es sich dabei um Kühlflüssigkeiten auf Mineralölbasis, doch auch synthetisch gewonnene Flüssigkeiten auf Basis von z.B. Silikonöl oder Ester oder letztlich auch sogenannte biologische Flüssigkeiten mit allerdings erhöhten Stockpunkt-Temperaturen sind für den Einsatz in Transformatoren denkbar.

Um die in der Transformatorwicklung 3 während des Betriebs des Transformators 1 erzeugte Wärme, die mit der elektrischen Belastung des Transformators 1 steigt, abzuleiten, ist ein Kühlsystem vorgesehen, in welchem die Kühlflüssigkeit 7 zirkuliert. Um die Wärmeenergie im Kühlsystem effizient von der Kühlflüssigkeit 7 an die Umgebung bzw. die umgebende Atmosphäre, insbesondere die Umgebungsluft, abzugeben, umfasst das Kühlsystem zumindest eine Wärmetauscher-Einheit 5 sowie mit der Wärmetauscher-Einheit 5 zusammenwirkende Mittel 15 zur Erhöhung der Wärmetauschleistung der zumindest einen Wärmetauscher-Einheit 5. Im vorliegenden Ausführungsbeispiel ist die Wärmetauscher-Einheit 5 mittels eines mit dem Gehäuse 2 verbundenen Kühlkreislaufes 4 angebunden. Die Zirkulation der Kühlflüssigkeit 7 durch das Kühlsystem, also insbesondere im Inneren des Gehäuses 2 und innerhalb des Kühlkreislaufs 4, kann grundsätzlich durch natürliche Konvektion stattfinden. Es soll dabei nicht unerwähnt bleiben, dass auch das Gehäuse 2 des Transformators 1 als Wärmetauscher fungiert, jedoch sind in der Regel keine eigenen Mittel 15 zur Erhöhung der Wärmetauschleistung für das Gehäuse 2 vorgesehen.

Im dargestellten Ausführungsbeispiel umfassen die Mittel 15 zur Erhöhung der Wärmetauschleistung sowohl eine Ventilatoreinheit 6, mittels welcher die Wärmetauscher-Einheit 5 gekühlt werden kann, sowie eine Pumpeinheit 11, mittels welcher die natürliche Konvektion der Kühlflüssigkeit 7 im Kühlsystem unterstützt werden bzw. eine Zwangskonvektion zumindest durch den Kühlkreislauf 4 bewirkt werden kann. Es versteht sich von selbst, dass die Anzahl von Wärmetauscher-Einheiten 5, Ventilatoreinheiten 6, Pumpeinheiten 11 und Kühlkreisläufen 4 unbeschränkt ist und je nach Anwendungsfall frei wählbar ist, wobei auch Systeme denkbar sind, welche nur eine oder mehrere Ventilatoreinheiten 6 oder nur eine oder mehrere Pumpeinheiten 11 umfassen.

Zum Zwecke des Wärmetauschs wird die Wärmetauscher-Einheit 5 im vorliegenden Ausführungsbeispiel durch die Umgebungsluft gekühlt, wobei die Umgebungsluft Wärme von der Wärmetauscher-Einheit 5 bzw. der durch die Wärmetauscher-Einheit 5 strömende Kühlflüssigkeit 7 aufnimmt. Kühlere Umgebungsluft kann der Wärmetauscher-Einheit 5 über natürliche Konvektion zugeführt werden und/oder mittels zumindest der Ventilatoreinheit 6. Wenn die Kühlung der Wärmetauscher-Einheit 5 - wie im dargestellten Ausführungsbeispiel - mittels der Ventilatoreinheit 6 erfolgt, wird Umgebungsluft von der Ventilatoreinheit 6 angesaugt und an einer der Radiator 5 zugwandten Austrittsseite 9 der Ventilatoreinheit 6 auf die Wärmetauscher-Einheit 5 geblasen.

Um die Kühlung des Transformators 1 zu regeln, wenn der Transformator 1 unter Last steht und Wärme erzeugt, ist eine Steuerungseinrichtung 8 vorgesehen, welche im vorliegenden Ausführungsbeispiel mit der Pumpeinheit 11, der Ventilatoreinheit 6 und einem ersten Temperatursensor 12 sowie einem zweiten Temperatursensor 13 zumindest zum Zwecke der Informationsübermittlung verbunden ist, was durch die strichlierten bzw. strichpunktierten Linien angedeutet ist. In bekannten Steuerungseinrichtungen 8 wird eine obere Temperatur Tₒ des Kühlsystems als Eingangsgröße erfasst und die erforderliche Kühlleistung in Abhängigkeit der oberen Temperatur Tₒ geregelt. Beispielsweise kann die obere Temperatur Tₒ von dem zweiten Temperatursensor 13 erfasst werden. Im vorliegenden Ausführungsbeispiel ist der zweite Temperatursensor 13 als Heißkühlflüssigkeits-Sensor, insbesondere als Heißölsensor, ausgebildet, welcher eine obere Temperatur Tₒ der Kühlflüssigkeit 7 erfasst. Es ist jedoch auch denkbar, dass die obere Temperatur Tₒ als Temperatur in der Transformatorwicklung 3 oder im Transformatorkern 10 bzw. im Inneren eines Wicklungspakets gemessen wird, wobei auch Kombinationen verschiedener Temperaturmessungen denkbar sind.

Üblicherweise werden die Mittel 15 zur Erhöhung der Wärmetauschleistung von der Steuerungseinrichtung 8 so angesteuert, dass diese aktiviert werden oder dass deren Kühlleistung erhöht wird, wenn die gemessene obere Temperatur Tₒ eine vordefinierte obere Temperaturschwelle übersteigt. Es versteht sich von selbst, dass auch mehrere obere Schwellwerte definiert sein können, wobei jedem Schwellwert eine unterschiedliche Kühlleistung zugeordnet ist.

Im Falle eines Betriebes mit problematischen Kalttemperaturen, sprich wenn die Temperatur des Kühlmittels 7 aufgrund niedriger Umgebungstemperaturen niedrig ist, oder eines Kaltstarts des Transformators 1, wenn also der Transformator 1 bei tiefen Umgebungstemperaturen in Betrieb genommen wird, kann die Kühlflüssigkeit 7 aufgrund der tiefen Umgebungstemperatur eine besonders hohe Viskosität aufweisen. Dadurch wird die Fähigkeit der Kühlflüssigkeit 7 zur Strömung durch den Kühlkreislauf 4, insbesondere durch die Wärmetauscher-Einheit 5, in nichtakzeptabler Weise erniedrigt, sodass die Kühlleistung der Wärmetauscher-Einheit 5 entfällt und die verbleibenden Kühlleistung des Gehäuses 2 des Transformators 3 unzureichend ist. Dieses Verhalten der Kühlflüssigkeit 7 bei niedrigen Umgebungstemperaturen kann, wie nachfolgend beschrieben, zu unzulässigen Betriebszuständen wie hohen Temperaturen im Transformator 1 führen:
Während die Kühlflüssigkeit 7 im Bereich der Transformatorwicklung 3 durch die im Betrieb entstehende Wärme erwärmt wird und sich die Viskosität verringert, sodass ein Teil der Kühlflüssigkeit 7 im Kühlsystem zirkuliert, bleiben Teile der Kühlflüssigkeit 7, welche sich im Kühlkreislauf 4 und in der Wärmetauscher-Einheit 5 befinden, unterkühlt und unterbinden somit eine Strömung der Kühlflüssigkeit 7 durch Kühlkreislauf 4 und Wärmetauscher-Einheit 5. Dies kann beispielsweise dadurch erklärt werden, dass diese Elemente des Kühlsystems weiter entfernt von der Transformatorwicklung 3 angeordnet sind sowie durch die Tatsache, dass diese Elemente in der Regel eine größere Oberfläche zum Wärmetausch aufweisen bzw. eine exponiertere Position einnehmen und unter stärkerem Einfluss der Umgebungstemperaturen stehen. So kann es dazu kommen, dass die Temperatur der Kühlflüssigkeit 7 im Kühlkreislauf 4 und der Wärmetauscher-Einheit 5 über einen längeren Zeitraum auf einem sehr niedrigen Temperaturniveau verbleibt. Würde nun eine herkömmliche Steuerungseinrichtung 8 verwendet werden, so würde - in der bereits erwärmten Kühlflüssigkeit 7, insbesondere im Kopfbereich des Gehäuses 2, oder in der Transformatorwicklung 3 selbst - eine hohe obere Temperatur Tₒ gemessen werden, welche eine zusätzliche Kühlung der Wärmetauscher-Einheit 5 durch die Ventilatoreinheit 6 und die Pumpeinheit 11 auslösen würde.

Dies ist jedoch als nachteilig anzusehen, da die aus der Wärmetauscher-Einheit 5 rückfließende Kühlflüssigkeit 7, welche die übrigen Teile der Kühlflüssigkeit 7 erwärmen sollte, durch die mittels der Ventilatoreinheit 6 bewirkten zusätzlichen Kühlung auf einem niedrigeren Temperaturniveau hält, sodass eine Strömung der Kühlflüssigkeit 7 durch den Kühlkreislauf 4 auf Grund mangelnder der weiterhin hohen Viskosität der Kühlflüssigkeit 7 im Bereich der Wärmetauscher-Einheit 5 nicht zustande kommt. In anderen Worten kann es durch die zusätzliche Kühlung der Kühlflüssigkeit 7 mittels der Ventilatoreinheit 6 dazu kommen, dass nur ein Teil des gesamten im Kühlsystem befindlichen Kühlmittels 7 im Kühlsystem zirkuliert, sodass die Wärme nicht effizient abgeleitet werden kann und es zu einer Überhitzung des Transformators 1 kommen kann. Insbesondere kritisch ist es dabei, dass die Wärmetauscher-Einheit 5 aufgrund der zusätzlichen Kühlung weiterhin nicht zur Kühlung der zirkulierenden Kühlflüssigkeit 7 beitragen kann und somit der Kühlkreislauf 4 seine Funktion nicht erfüllen kann. Grund dafür ist - wie bereits zuvor erwähnt - die hohe Viskosität der aufgrund der niedrigen Umgebungstemperatur und zusätzlichen Kühlung erkalteten Kühlflüssigkeit 7 im Kühlkreislauf 4 und der Wärmetauscher-Einheit.

Um diese Nachteile zu überwinden, ist in der vorliegenden Erfindung vorgesehen, dass im Kühlsystem eine untere Temperatur Tᵤ der Kühlflüssigkeit 7 gemessen wird und die Steuerungseinrichtung 8 unabhängig von der gemessenen zumindest einen oberen Temperatur Tₒ die Mittel 15 zur Erhöhung der Wärmetauschleistung nicht aktiviert oder die Mittel 15 zur Erhöhung der Wärmetauschleistung mit einer gegenüber dem Regelbetriebszustand verringerten Leistung betreibt, wenn die untere Temperatur Tᵤ der Kühlflüssigkeit 7 während des Betriebs des Transformators 1 unterhalb eines unteren Schwellwerts Sᵤ liegt. Zur Erfassung der unteren Temperatur Tᵤ der Kühlflüssigkeit 7 ist der erster Temperatursensor 12 im vorliegenden Ausführungsbeispiel in einem Bodenbereich 14 des Gehäuses 2 angeordnet. Da die Kühlflüssigkeit 7 mit der tiefsten Temperatur aufgrund der hohen Viskosität bzw. der hohen Dichte in Richtung des Bodens des Gehäuses 2 absinkt während die im Bereich der Transformatorwicklung 3 erwärmte Kühlflüssigkeit 7 aufsteigt, eignet sich ein im Bodenbereich 14 angeordneter erster Temperatursensor 12 besonders gut zur Erfassung der unteren Temperatur Tᵤ der Kühlflüssigkeit 7, da im Bodenbereich 14 die tiefste Temperatur der Kühlflüssigkeit 7 zu erwarten ist.

Vorteilhaft ist es dabei, wenn der von der Zusammensetzung der verwendeten Kühlflüssigkeit 7 abhängige untere Schwellwert Sᵤ in Relation zum Stockpunkt bzw. zum Stockwert der Kühlflüssigkeit 7 definiert ist. So hat es sich beispielsweise als besonders vorteilhaft herausgestellt, wenn der untere Schwellwert Sᵤ z.B. 40 °C über dem Stockpunkt liegt. Liegt also die gemessene untere Temperatur Tᵤ der Kühlflüssigkeit 7 unter dem unteren Schwellwert Sᵤ, beispielsweise gar mehr als 20 °C unter dem unteren Schwellwert Sᵤ, so ist, abhängig von der Viskosität und den hydraulischen Verhältnissen wie bspw. dem hydraulischen Widerstand und dem dagegen arbeitenden Auftriebsdruck, ist keine ausreichende Zirkulation der Kühlflüssigkeit 7 im Kühlkreislauf 4 bzw. durch die Wärmetauscher-Einheit 5 möglich. In diesem Fall soll die Steuerungseinrichtung 8 erfindungsgemäß eine zusätzliche Kühlung der Kühlflüssigkeit 7 in der Wärmetauscher-Einheit 5 verhindern.

Nach dem vorgeschlagenen Verfahren wird demnach die zusätzliche Kühlung der Wärmetauscher-Einheit 5 durch die Ventilatoreinheit 6 bei einer Kaltstart Situation, die durch die unter dem unteren Schwellwert Sᵤ liegende gemessene untere Temperatur Tᵤ detektiert wird, entweder gänzlich abgestellt oder zumindest reduziert, sodass sich die kalte Kühlflüssigkeit 7 im unteren Bereich des Gehäuses 2 und die im Kühlkreislauf 4 befindliche Kühlflüssigkeit 7 schneller an das Temperaturniveau der bereits zirkulierenden Kühlflüssigkeit 7 angleicht und sich somit eine Viskosität der Kühlflüssigkeit 7 einstellt, die eine Zirkulation der möglichst gesamten Kühlflüssigkeit 7 im Kühlsystem, insbesondere im Kühlkreislauf 4 und durch die Wärmetauscher-Einheit 5, erlaubt und entsprechend eine funktionierende Kühlung des Transformators 1 auch bei einer Kaltproblematik erreicht wird. Sobald die untere Temperatur Tᵤ den unteren Schwellwert Sᵤ erreicht bzw., beispielsweise in einem vordefinierten über dem unteren Schwellwert Sᵤ liegenden Übergangstemperaturbereich ΔT (siehe Fig. 2), überschritten hat, kann der Regelbetriebszustand von derSteuerungseinrichtung 8 wieder aktiviert werden, sodass die zusätzliche Kühlung der Wärmetauscher-Einheit 5 wieder aktiviert wird bzw. die Leistung der Ventilatoreinheit 6 auf einen Normalwert gesteigert und in Abhängigkeit der gemessenen oberen Temperatur Tₒ geregelt bzw. gesteuert wird.

Ein weiterer Aspekt des Verfahrens betrifft den Einsatz der Pumpeinheit 11 als Teil der Mittel 15 zur Erhöhung der Wärmetauschleistung. Die Pumpeinheit 11 trägt maßgeblich zum Wärmeabtransport aus den erwärmten Bereichen des Transformators 1 hin zu den Wärmetauscher-Einheiten 5 bei. Durch den Wärmetransport sowie die durch den Betrieb freiwerdende Wärme kann die Pumpeinheit 11 auch verwendet werden, um die kalte oder sogar stockende Kühlflüssigkeit 7 im Bereich der Wärmetauscher-Einheit 5 zu erwärmen. Die Pumpeinheit 11 dient weiters zur Verbesserung der Strömungssituation durch eine Erhöhung des Förderdrucks im Kühlkreislauf 4 zusätzlich zu den natürlichen Auftriebsverhältnissen eingesetzt wird. Wenn eine untere Temperatur Tᵤ der Kühlflüssigkeit 7 detektiert wird, die unter dem unteren Schwellwert Sᵤ liegt, kann die Steuerungseinrichtung 8 die Pumpeinheit 11 derart steuern, dass durch die Pumpeinheit 11 eine stärkere Durchströmung des zu geringen Durchflusses im Kühlkreislauf 4 bzw. in der Wärmetauscher-Einheit 5 bewirkt und so die durch den Transformator 1 erhitzte Kühlflüssigkeit 7 der Wärmetauscher-Einheit 5 zugeführt wird. In diesem Fall bleibt somit die Ventilatoreinheit 6 aufgrund der detektierten Unterschreitung des unteren Schwellwerts Sᵤ deaktiviert während die Pumpeinheit 11 aktiviert wird.

In diesem Zusammenhang soll kurz auf Fig. 2 eingegangen werden, die eine schematische Darstellung der relevanten Werte der unteren Temperatur Tᵤ wiedergibt. Der untere Schwellwert Sᵤ, bei welchem eine erfindungsgemäße Anpassung der Leistung der Mittel 15 zur Erhöhung der Wärmetauschleistung stattfindet, wurde bereits eingehend diskutiert. Dieser untere Schwellwert Sᵤ kann beispielsweise zwischen 20°C und 30°C über dem Stockpunkt liegen.

Ebenso erwähnt wurde der Übergangstemperaturbereich ΔT, dessen Untergrenze der untere Schwellwert Sᵤ bildet. In diesem Bereich von üblicher Weise zwischen 20°C und 25°C oberhalb des untere Schwellwerts Sᵤ kann eine erfindungsgemäße Reduktion der Kühlung aufrecht erhalten werden, beispielsweise um eine entsprechende Erwärmung der Kühlflüssigkeit 7 im Kühlkreislauf 4 bzw. in der Wärmetauscher-Einheit 5 sicherzustellen, die einen Betrieb der Mittel 15 zur Erhöhung der Wärmetauschleistung im Regelbetrieb ermöglicht. So kann beispielsweise einer zeitlichen Verzögerung zwischen der Erhöhung der gemessenen unteren Temperatur Tᵤ im Gehäuse 2 und der tatsächlichen Erwärmung im kompletten Kühlkreislauf 4 bzw. in der Wärmetauscher-Einheit 5 Rechnung getragen werden.

Wie oben diskutiert kann der Betrieb der Pumpeinheit 11 unterhalb des unteren Schwellwerts Sᵤ vorteilhaft sein. Liegt die Temperatur Tᵤ jedoch unter einer unteren Grenztemperatur Gᵤ, welche im Bereich des Stockpunktes der Kühlflüssigkeit liegt, beispielsweise nur bis 5 °C über dem Stockpunkt, so ist die Viskosität der Kühlflüssigkeit 7 so hoch, dass eine dauerhafte Inbetriebnahme der Pumpeinheit 11 durch die unzureichende Kühlung aufgrund des verringerten Durchflusses von Kühlflüssigkeit 7 durch die Pumpeinheit 11 den Motorschutz der Pumpeinheit 11 auslösen würde, sodass die Pumpeinheit für einen längeren Zeitraum deaktiviert bleiben würde. Daher kann die Steuerungseinheit 8 so eingerichtet sein, dass die Pumpeinheit 11 entweder gänzlich deaktiviert bleibt oder aber intervallmäßig aktiviert und deaktiviert wird, während die Ventilatoreinheit 6 ständig deaktiviert bleibt , wenn die untere Temperatur Tᵤ unter der unteren Grenztemperatur Gᵤ liegt. Ein intervallmäßiger Betrieb kann beispielsweise erreicht werden, indem die Pumpeinheit 11 abwechselnd über einen ersten Zeitraum, beispielsweise 10 min, aktiviert wird und anschließend über einen zweiten Zeitraum, beispielsweise gleich lang wie der erste Zeitraum, deaktiviert wird. Im Temperaturbereich zwischen der unteren Grenztemperatur Gᵤ und dem unteren Schwellwert Sᵤ und gegebenenfalls im Übergangstemperaturbereich ΔT bleibt die Pumpeinheit 11 aktiviert, während die Ventilatoreinheit 6 deaktiviert bleibt oder mit geringer Leistung betrieben wird. Selbiges gilt natürlich analog für die Pumpeinheit 11 alleine, wenn keine Ventilatoreinheit 6 vorhanden ist. Wenn die untere Temperatur Tᵤ den unteren Schwellwert Sᵤ überschreitet bzw. den Übergangstemperaturbereich ΔT überschreitet, kann die Kühlung wieder im Regelbetriebszustand basierend auf der oberen Temperatur Tₒ im Rahmen des Regelbetriebszustands erfolgen.

Handelt es sich beispielsweise bei der Kühlflüssigkeit 7 um eine mineralölbasierte Kühlflüssigkeit, so liegt die Stocktemperatur bzw. jene Temperatur, bei der die Kühlflüssigkeit 7 eine dynamische Viskosität von 1800 mm²/s überschreitet, bei etwa -45°C. Die, insbesondere für den Betrieb der Pumpeinheit 11 relevante, untere Grenztemperatur Gᵤ kann rein exemplarisch bei etwa -40°C liegen während der, insbesondere für den Betrieb der Ventilatoreinheit 6 relevante, untere Schwellwert Sᵤ bei etwa -15 °C liegt. Der zugehörige Übergangstemperaturbereich ΔT endet entsprechend bei einer unteren Temperatur von etwa 10°C. Darüber erfolgt die Steuerung wieder auf dem Regelbetriebszustand basierend auf der oberen Temperatur Tₒ.

Schließlich ist es auch denkbar, dass über einen Wandler am Transformator 1 ein Stromwert gemessen wird, der den auf einer Primärseite oder einer Sekundärseite des Transformators 1 fließend Strom angibt oder zumindest zu diesem proportional ist. Auf einer computerbasierten Lösung, welche die Information auch aus anderen Bereichen beziehen kann, im Extremfall aus der Netz-Leittechnik, stehen diverse Szenarien offen. Unter Berücksichtigung der gemessenen unteren Temperatur Tᵤ der Kühlflüssigkeit 7 kann somit durch die Miteinbeziehung der Last des Transformators 1 eine vorzeitige Kühlung des Transformators 1 durch die Steuerungseinrichtung 8 erreicht werden, wenn sich der Transformator 1 nicht in einer Situation mit kritischer niedriger unterer Temperatur Tᵤ der Kühlflüssigkeit 7 befindet, jedoch ein oberer Schwellwert der oberen Temperatur Tₒ des Kühlsystems noch nicht erreicht wird. Mit anderen Worten kann eine zusätzliche Kühlung bereits bewirkt werden, bevor der tatsächliche obere Schwellwert der oberen Temperatur Tₒ erreicht wird.

### Bezugszeichenliste:

- 1: Transformator
- 2: Gehäuse des Transformators
- 3: Transformatorwicklung
- 4: Kühlkreislauf
- 5: Wärmetauscher-Einheit
- 6: Ventilatoreinheit
- 7: Kühlflüssigkeit
- 8: Steuerungseinrichtung
- 9: Austrittsseite des Ventilators
- 10: Transformatorkern
- 11: Pumpeinheit
- 12: erster Temperatursensor
- 13: zweiter Temperatursensor
- 14: Bodenbereich
- 15: Mittel zur Erhöhung der Wärmetauschleistung

## Patentansprüche

1. Verfahren zum Betreiben eines Kühlsystems eines zumindest eine Transformatorwicklung (3) aufweisenden Transformators (1), vorzugsweise eines Leistungstransformators oder einer Drossel,
wobei eine Kühlflüssigkeit (7) des Kühlsystems die zumindest eine Transformatorwicklung (3) umgibt und in einem Regelbetriebszustand des Transformators (1) die Kühlflüssigkeit (7) im Kühlsystem zirkuliert, wobei zumindest die in der zumindest einen Transformatorwicklung (3) entstehende Wärme mittels der zirkulierenden
Kühlflüssigkeit (7) an eine umgebende Atmosphäre abgegeben wird,
das Kühlsystem umfassend
- zumindest eine von der Kühlflüssigkeit (7) durchströmbare Wärmetauscher-Einheit (5) zur Abgabe von Wärme von der Kühlflüssigkeit (7) an die umgebende Atmosphäre,
- mit der zumindest einen Wärmetauscher-Einheit (5) zusammenwirkende Mittel (15) zur Erhöhung einer Wärmetauschleistung der zumindest einen Wärmetauscher-Einheit (5),
- eine Steuerungseinheit (8) zur Regelung der Wärmetauschleistung der zumindest einen Wärmetauscher-Einheit (5),
wobei eine obere Temperatur Tₒ im Kühlsystem und/oder am Transformator (1) gemessen wird und die Steuerungseinheit (8) in einem Regelbetriebszustand eine Leistung der Mittel (15) zur Erhöhung der Wärmetauschleistung der zumindest einen Wärmetauscher-Einheit (5) in Abhängigkeit der gemessenen oberen Temperatur Tₒ regelt,
**dadurch gekennzeichnet, dass**
im Kühlsystem eine untere Temperatur Tᵤ der
Kühlflüssigkeit (7) gemessen wird und die Steuerungseinheit (8) unabhängig von der gemessenen oberen Temperatur Tₒ die Mittel (15) zur Erhöhung der Wärmetauschleistung der zumindest einen Wärmetauscher-Einheit (5) nicht aktiviert und/oder die Mittel (15) zur Erhöhung der Wärmetauschleistung der zumindest einen Wärmetauscher-Einheit (5) mit einer gegenüber dem Regelbetriebszustand verringerten Leistung betreibt, wenn die untere Temperatur Tᵤ der Kühlflüssigkeit (7) während des Betriebs des Transformators (1) unterhalb eines unteren Schwellwerts Sᵤ liegt.

2. Verfahren nach Anspruch 1, **dadurch gekennzeichnet, dass** die Mittel (15) zur Erhöhung der Wärmetauschleistung der zumindest einen Wärmetauscher-Einheit (5) zumindest eine Ventilatoreinheit (6) und/oder zumindest eine die Kühlflüssigkeit (7) im Regelbetriebszustand durch die zumindest eine Wärmetauscher-Einheit (5) fördernde Pumpeinheit (11) umfassen.

3. Verfahren nach Anspruch 1 oder 2, **dadurch gekennzeichnet, dass** der Transformator (1) innerhalb eines mit der Kühlflüssigkeit (7) gefüllten Gehäuses (2) angeordnet ist und die Wärmetauscher-Einheit (5) in einem mit dem Gehäuse (2) strömungsverbundenen Kühlkreislauf (4) angeordnet ist, wobei die Kühlflüssigkeit (7) im Regelbetriebszustand durch den Kühlkreislauf (4) zirkuliert.

4. Verfahren nach einem der Ansprüche 1 bis 3, **dadurch gekennzeichnet, dass** die untere Temperatur Tᵤ der Kühlflüssigkeit (7) in jenem Bereich des Kühlsystems, vorzugsweise in jenem Bereich des Gehäuses (2), gemessen wird, in welchem die tiefste Temperatur der Kühlflüssigkeit (7) zu erwarten ist.

5. Verfahren nach Anspruch 3 oder 4, **dadurch gekennzeichnet, dass** die untere Temperatur Tᵤ mittels eines ersten Temperatursensors (12) gemessen wird, wobei der erste Temperatursensor (12) in einem Bodenbereich (14) des Gehäuses (2) und/oder im Bereich der Einmündung eines Rücklaufs des Kühlkreislaufs (4) in das Gehäuse (2) angeordnet ist.

6. Verfahren nach einem der Ansprüche 1 bis 5, **dadurch gekennzeichnet, dass** die Mittel (15) zur Erhöhung der Wärmetauschleistung der zumindest einen Wärmetauscher-Einheit (5) zumindest eine, die Kühlflüssigkeit (7) im Regelbetriebszustand durch die zumindest eine Wärmetauscher-Einheit (5) fördernde, Pumpeinheit (11) umfassen, wobei die zumindest eine Pumpeinheit (11) von der Steuerungseinheit (8) aktiviert wird, wenn die untere Temperatur Tᵤ der Kühlflüssigkeit (7) während des Betriebs des Transformators (1) unterhalb des unteren Schwellwerts Sᵤ und oberhalb einer unteren Grenztemperatur Gᵤ liegt.

7. Verfahren nach einem der Ansprüche 1 bis 6, **dadurch gekennzeichnet, dass** die Mittel (15) zur Erhöhung der Wärmetauschleistung der zumindest einen Wärmetauscher-Einheit (5) zumindest eine, die Kühlflüssigkeit (7) im Regelbetriebszustand durch die zumindest eine Wärmetauscher-Einheit (5) fördernde, Pumpeinheit (11) umfassen, wobei die zumindest eine Pumpeinheit (11) von der Steuerungseinheit (8) intervallmäßig aktiviert und deaktiviert wird, wenn die untere Temperatur Tᵤ der Kühlflüssigkeit (7) während des Betriebs des Transformators (1) unterhalb einer unteren Grenztemperatur Gᵤ liegt, welche untere Grenztemperatur Gᵤ niedriger ist als der untere Schwellwert Sᵤ.

8. Verfahren nach einem der Ansprüche 1 bis 5, **dadurch gekennzeichnet, dass** die Mittel (15) zur Erhöhung der Wärmetauschleistung der zumindest einen Wärmetauscher-Einheit (5) zumindest eine Ventilatoreinheit (6) und zumindest eine die Kühlflüssigkeit (7) im Regelbetriebszustand durch die zumindest eine Wärmetauscher-Einheit (5) fördernde Pumpeinheit (11) umfassen, wobei die Steuerungseinheit (8)
- die zumindest eine Ventilatoreinheit (6) deaktiviert und die zumindest eine Pumpeinheit (11) entweder deaktiviert oder intervallmäßig aktiviert und deaktiviert,
wenn die untere Temperatur Tᵤ der Kühlflüssigkeit (7) unterhalb einer unteren Grenztemperatur Gᵤ liegt, welche untere Grenztemperatur Gᵤ niedriger ist als der untere Schwellwert Sᵤ;
- die zumindest eine Ventilatoreinheit (6) deaktiviert und die zumindest eine Pumpeinheit (11) aktiviert, wenn die untere Temperatur Tᵤ der Kühlflüssigkeit (7) zwischen der unteren Grenztemperatur Gᵤ und dem unteren Schwellwert Sᵤ liegt;
- die zumindest eine Ventilatoreinheit (6) und die zumindest eine Pumpeinheit (11) basierend auf dem Regelbetriebszustand betreibt, wenn die untere Temperatur Tᵤ oberhalb des unteren Schwellwerts Sᵤ liegt.

9. Verfahren nach einem der Ansprüche 1 bis 8, **dadurch gekennzeichnet, dass** der untere Schwellwert Sᵤ in einem Bereich von zwischen 10°C und 40°C, bevorzugt zwischen 20°C und 30°C, oberhalb einer Stocktemperatur der Kühlflüssigkeit (7) liegt.

10. Verfahren nach einem der Ansprüche 1 bis 8, **dadurch gekennzeichnet, dass** der untere Schwellwert Sᵤ in einem Bereich von zwischen 10°C und 40°C, bevorzugt zwischen 20°C und 30°C, oberhalb jener Temperatur liegt, bei welcher Temperatur die kinematische Zähigkeit der Kühlflüssigkeit größer gleich 1800 mm²/s ist.

11. Verfahren nach einem der Ansprüche 1 bis 10, **dadurch gekennzeichnet, dass** die Kühlflüssigkeit (7) ausgewählt ist aus der Gruppe umfassend mineralölbasierte Flüssigkeiten, synthetisch hergestellte Öle, insbesondere Silikonöl, synthetisch hergestellte Ester, biologisch hergestellte Flüssigkeiten.

12. Verfahren nach einem der Ansprüche 1 bis 11, **dadurch gekennzeichnet, dass** ein Stromwert gemessen wird, der den auf einer Primärseite oder Sekundärseite des Transformators (1) durch den Transformator (1) fließenden Strom angibt oder proportional zu diesem Strom ist,
und dass die Leistung der Mittel (15) zur Erhöhung der Wärmetauschleistung durch die Steuerungseinrichtung (8) unabhängig von der gemessenen zumindest einen oberen Temperatur Tₒ im Vergleich zum Regelbetriebszustand erhöht wird, wenn der gemessene Stromwert einen oberen Schwellwert überschreitet und wenn die untere Temperatur Tᵤ der Kühlflüssigkeit (7) oberhalb des unteren Schwellwerts Sᵤ liegt.

13. Steuerungseinrichtung (8) für ein Kühlsystem eines zumindest eine Transformatorwicklung (3) aufweisenden Transformators (1), vorzugsweise eines Leistungstransformators oder eine Drossel,
wobei das Kühlsystem eine Kühlflüssigkeit (7) enthält, welche während des Betriebs des Transformators (1) innerhalb des Kühlsystems zirkuliert,
wobei die Steuerungseinrichtung (8) zumindest die Leistung von mit zumindest einer Wärmetauscher-Einheit (5) zusammenwirkenden Mittel (15) zur Erhöhung der Wärmetauschleistung der zumindest einen Wärmetauscher-Einheit (5) regelt,
wobei die zumindest eine Wärmetauscher-Einheit (5) ausgebildet ist, um Wärme von der Kühlflüssigkeit (7) an die umgebende Atmosphäre abzugeben,
**dadurch gekennzeichnet, dass**
die Steuerungseinrichtung (8) mit einem ersten Temperatursensor (12) zur Messung einer unteren Temperatur Tᵤ der Kühlflüssigkeit (7) verbunden ist und dass die Steuerungseinrichtung (8) zur Durchführung eines Verfahrens nach einem der Ansprüche 1 bis 12 eingerichtet ist.

14. Transformator (1), vorzugsweise Leistungstransformator oder Drossel, umfassend zumindest eine Transformatorwicklung (3) sowie ein Kühlflüssigkeit (7) enthaltendes Kühlsystem zur Kühlung der zumindest einen Transformatorwicklung (3),
wobei das Kühlsystem zumindest eine Wärmetauscher-Einheit (5) zur Abgabe von Wärme von der Kühlflüssigkeit (7) an eine umgebende Atmosphäre sowie mit der zumindest einen Wärmetauscher-Einheit (5) zusammenwirkende Mittel (15) zur Erhöhung der Wärmetauschleistung der zumindest einen Wärmetauscher-Einheit (5) sowie eine Steuerungseinheit (8) zur Regelung zumindest der Leistung der Mittel (15) zur Erhöhung der Wärmetauschleistung der zumindest einen Wärmetauscher-Einheit (5),
**dadurch gekennzeichnet, dass**
der Transformator (1) einen ersten Temperatursensor (12) zur Bestimmung einer unteren Temperatur Tᵤ des Kühlmittels (7) aufweist und dass die Steuerungseinrichtung (8) gemäß Anspruch 13 ausgebildet ist.

15. Computerprogrammprodukt, umfassend Befehle, welche bewirken, dass die Steuerungseinrichtung (8) nach Anspruch 13 die gemessene untere Temperatur Tᵤ der Kühlflüssigkeit (7) mit dem unteren Schwellwert Sᵤ vergleicht und Steuerungssignale und/oder Ein/Aus-Signale an die Mittel (15) zur Erhöhung der Wärmetauschleistung der zumindest einen Wärmetauscher-Einheit (5) sendet, um das Verfahren nach einem der Ansprüche 1 bis 12 auszuführen.
